## Europäisches Patentamt
## European Patent Office
## Office européen des brevets

(19)

(11) Veröffentlichungsnummer: **0 009 589**
**B1**

(12)

# EUROPÄISCHE PATENTSCHRIFT

(45) Veröffentlichungstag der Patentschrift:
**17.11.82**

(51) Int. Cl.³: **C 08 F 10/00,** C 08 F 4/64

(21) Anmeldenummer: **79103039.8**

(22) Anmeldetag: **20.08.79**

(54) Verfahren zum Herstellen von Homo- und Copolymerisaten von Alpha-Monoolefinen.

(30) Priorität: **07.09.78 DE 2838989**

(43) Veröffentlichungstag der Anmeldung:
**16.04.80 Patentblatt 80/8**

(45) Bekanntmachung des Hinweises auf die Patenterteilung:
**17.11.82 Patentblatt 82/46**

(84) Benannte Vertragsstaaten:
**AT BE DE FR GB IT**

(56) Entgegenhaltungen:
**DE-A-2 137 872**
**DE-A-2 352 154**
**DE-A-2 543 219**
**DE-A-2 543 272**
**DE-A-2 603 920**
**FR-A-2 340 327**

(73) Patentinhaber: **BASF Aktiengesellschaft,**
**Carl-Bosch-Strasse 38, D-6700 Ludwigshafen (DE)**

(72) Erfinder: **Klaerner, Peter, Dr., Hauptstrasse 62,**
**D-6719 Battenberg (DE)**
Erfinder: **Schweier, Günther, Dr., Mundenheimer**
**Strasse 148, D-6700 Ludwigshafen (DE)**
Erfinder: **Ehlers, Ehler, Ing. grad., Ulmenstrasse 13,**
**D-6704 Mutterstadt (DE)**
Erfinder: **Frielingsdorf, Hans, Dr. Dipl-Ing., Auf dem**
**Koppel 4, D-6702 Bad Duerkheim (DE)**

0 009 589

## Verfahren zum Herstellen von Homo- und Copolymerisaten von $\alpha$-Monoolefinen

Die vorliegende Erfindung betrifft ein Verfahren zum Herstellen von Homo- und Copolymerisaten von $C_2$- bis $C_6$-$\alpha$-Monoolefinen durch Polymerisation des bzw. der Monomeren bei Temperaturen von 30 bis 200° C und Drücken von 0,1 bis 200 bar mittels eines Ziegler-Katalysatorsystems aus

(1)  einer Titan enthaltenden Katalysatorkomponente, die erhalten worden ist unter Verwendung von

(i)  einem feinteiligen, porösen, anorganisch-oxidischen Stoff (Ib), der einen Teilchendurchmesser von 1 bis 1000, vorzugsweise 1 bis 400 µm, ein Porenvolumen von 0,3 bis 3, vorzugsweise 1 bis 2,5 $cm^3/g$ sowie eine Oberfläche von 100 bis 1000, vorzugsweise 200 bis 400 $m^2/g$ besitzt und die Formel $SiO_2 \cdot aAl_2O_3$ — worin a steht für eine Zahl im Bereich von 0 bis 2, insbesondere 0 bis 0,5 — hat, und

(ii)  einer Lösung (II), wie sie sich ergibt beim Zusammenbringen von

(IIa)  100 Gewichtsteilen eines Alkohols — in Form eines Einzelindividuums oder eines Gemisches aus zwei oder mehr Einzelindividuen — der allgemeinen Formel

$$Z-OH,$$

worin Z steht für einen gesättigten $C_1$- bis $C_8$-Kohlenwasserstoffrest, insbesondere einen gesättigten $C_1$- bis $C_6$-Kohlenwasserstoffrest, und vorzugsweise einen $C_1$- bis $C_4$-Alkylrest,

(IIb)  0,01 bis 6, vorzugsweise 0,04 bis 3,5 Gewichtsteilen (gerechnet als Titan) eines Titantrihalogenids, wobei das Halogen Chlor und/oder Brom sein kann, vorzugsweise eines Titantrichlorids, sowie

(IIc)  0,01 bis 4, vorzugsweise 0,04 bis 2,5 Gewichtsteilen (gerechnet als Magnesium) einer in dem Alkohol (IIa) löslichen Magnesiumverbindung — in Form eines Einzelindividuums oder eines Gemisches aus zwei oder mehr Einzelindividuen —, insbesondere einer solchen, die Halogen und/oder Kohlenstoff und vorzugsweise einer solchen, die Chlor sowie Kohlenstoff gebunden enthält,

mit den Maßgaben, daß das Gewichtsverhältnis anorganisch-oxidischer Stoff (Ib) : Titan in dem Titantrihalogenid (IIb) im Bereich von 1 : 0,01 bis 1 : 0,2, vorzugsweise von 1 : 0,03 bis 1 : 0,15, und das Gewichtsverhältnis anorganisch-oxidischer Stoff (Ib) : Magnesium in der Magnesiumverbindung (IIc) im Bereich von 1 : 0,01 bis 1 : 0,25, vorzugsweise von 1 : 0,03 bis 1 : 0,15 liegt und

(2)  einer Metallverbindung der allgemeinen Formel

$$MeA_{m-n}X_n,$$

worin stehen

Me  für die Metalle Aluminium, Magnesium bzw. Zink, vorzugsweise Aluminium,
A  für einen $C_1$- bis $C_{12}$-Kohlenwasserstoffrest, insbesondere einen $C_1$- bis $C_{12}$-Alkylrest, und vorzugsweise einen $C_2$- bis $C_8$-Alkylrest,
X  für Chlor, Brom, Jod bzw. Wasserstoff, vorzugsweise Chlor bzw. Wasserstoff,
m  für die Zahl der Wertigkeit des Metalls Me und
n  für eine Zahl von 0 bis $m-1$, insbesondere eine Zahl von 0 bis 1, und vorzugsweise die Zahl 0,

mit der Maßgabe, daß das Atomverhältnis Titan aus der Katalysatorkomponente (1) : Metall (Me) aus der Katalysatorkomponente (2) im Bereich von 1 : 0,1 bis 1 : 500, vorzugsweise 1 : 0,2 bis 1 : 200, liegt.

Verfahren dieser Art sind bekannt (vgl. DE-A-2 603 920) und haben sich in der Technik gut bewährt; sie lassen jedoch noch eine Reihe kleinerer oder größerer Wünsche offen. So ist es z. B. die einzusetzende, Titan enthaltende Katalysatorkomponente (1), die noch Unzulänglichkeiten mit sich bringt. Dies gilt auch für solche Titan enthaltenden Katalysatorkomponenten, die von einem feinteiligen Trägerstoff ausgehend hergestellt werden. Diese sogenannten »Trägerkatalysatoren« sind in der technischen Praxis anderen Titan enthaltenden Katalysatorkomponenten bekanntlich im allgemeinen vorzuziehen, da sie sowohl einen guten Betrieb als auch ein gutes Betriebsergebnis ermöglichen. Dieser Vorteil muß jedoch mit dem Nachteil erkauft werden, daß die üblichen »Trägerkatalysatoren« des hier in Rede stehenden Typs nicht nur in ihrer Handhabung relativ gefährlich und in relativ hohem Maß umweltbelastend sind, sondern auch nur relativ umständlich erhältlich und relativ wenig produktiv sind.

2

0 009 589

Die Aufgabenstellung zur vorliegenden Erfindung richtete sich demzufolge auf Titan enthaltende Katalysatorkomponenten (1), die ausgehend von einem feinteiligen Trägerstoff hergestellt werden, aber mit den vorerwähnten Nachteilen nicht oder in erheblich geringerem Maße verbunden sind und zudem im Betrieb sowie im Betriebsergebnis vorteilhafte Wirkungen entfalten können; — im Betrieb z. B. das Polymerisat nicht nur in einer hohen, sondern auch über die Zeit konstanten spezifischen Ausbeute erhältlich machen und als Betriebsergebnis z. B. ein Polymerisat zu liefern vermögen, das besonders günstige morphologische Eigenschaften hat, wie hohes Schüttgewicht und geringer Feinkornanteil.

Es wurde gefunden, daß die gestellte Aufgabe gelöst werden kann mittels einer Titan enthaltenden Katalysatorkomponente (1), die man erhält, indem man (1.1) in einer ersten Stufe zunächst (1.1.1) eine Suspension (I), wie sie sich ergibt beim Zusammenbringen von (Ia) einem flüssigen inerten Kohlenwasserstoff und (Ib) dem feinteiligen oxidischen Stoff (Ib), und (1.1.2) die Lösung (II) unter Bildung einer Dispersion (III) miteinander in Berührung bringt, dann (1.2) in einer zweiten Stufe die aus Stufe (1.1) erhaltene Dispersion (III) unter Bildung einer Suspension so lange der azeotropen Destillation unterwirft, bis im Destillat kein Alkohol mehr übergeht, und anschließend (1.3) in einer dritten Stufe die aus Stufe (1.2) erhaltene Suspension mit einer ausgewählten Metallverbindung (IV) unter Erhaltung des Zustandes einer Suspension und unter Entweichen eines Gases so lange versetzt, bis kein Gas mehr entweicht; — wobei der dabei als Suspendiertes resultierende festphasige Stoff die neue Titan enthaltende Katalysatorkomponente (1) ist.

Gegenstand der vorliegenden Erfindung ist dementsprechend ein Verfahren zum Herstellen von Homo- und Copolymerisaten von $C_2-C_6$-$\alpha$-Monoolefinen durch Polymerisation des bzw. der Monomeren bei Temperaturen von 30 bis 200°C und Drücken von 0,1 bis 200 bar mittels eines Ziegler-Katalysatorsystems aus

(1)  einer Titan enthaltenden Katalysatorkomponente, die erhalten worden ist unter Verwendung von

    (i)  einem feinteiligen, porösen, anorganisch-oxidischen Stoff (Ib), der einen Teilchendurchmesser von 1 bis 1000, vorzugsweise 1 bis 400 μm, ein Porenvolumen von 0,3 bis 3, vorzugsweise 1 bis 2,5 cm³/g sowie eine Oberfläche von 100 bis 1000, vorzugsweise 200 bis 400 m²/g besitzt und die Formel $SiO_2 \cdot aAl_2O_3$ — worin a steht für eine Zahl im Bereich von 0 bis 2, insbesondere 0 bis 0,5 — hat, und

    (ii)  einer Lösung (II), wie sie sich ergibt beim Zusammenbringen von

        (IIa)  100 Gewichtsteilen eines Alkohols — in Form eines Einzelindividuums oder eines Gemisches aus zwei oder mehr Einzelindividuen — der allgemeinen Formel

$$Z-OH,$$

        worin Z steht für einen gesättigten $C_1$- bis $C_8$-Kohlenwasserstoffrest, insbesondere einen gesättigten $C_1$- bis $C_6$-Kohlenwasserstoffrest, und vorzugsweise einen $C_1$- bis $C_4$-Alkylrest,

        (IIb)  0,01 bis 6, vorzugsweise 0,04 bis 3,5 Gewichtsteilen (gerechnet als Titan) eines Titantrihalogenids, wobei das Halogen Chlor und/oder Brom sein kann, vorzugsweise eines Titantrichlorids, sowie

        (IIc)  0,01 bis 4, vorzugsweise 0,04 bis 2,5 Gewichtsteilen (gerechnet als Magnesium) einer in dem Alkohol (IIa) löslichen Magnesiumverbindung — in Form eines Einzelindividuums oder eines Gemisches aus zwei oder mehr Einzelindividuen —, insbesondere einer solchen, die Halogen und/oder Kohlenstoff, und vorzugsweise einer solchen, die Chlor sowie Kohlenstoff gebunden enthält,

    mit den Maßgaben, daß das Gewichtsverhältnis anorganisch-oxidischer Stoff (Ib) : Titan in dem Titantrihalogenid (IIb) im Berich von 1 : 0,01 bis 1 : 0,2, vorzugsweise von 1 : 0,03 bis 1 : 0,15, und das Gewichtsverhältnis anorganisch-oxidischer Stoff (Ib) : Magnesium in der Magnesiumverbindung (IIc) im Bereich von 1 : 0,01 bis 1 : 0,25, vorzugsweise von 1 : 0,03 bis 1 : 0,15 liegt und

(2)  einer Metallverbindung der allgemeinen Formel

$$MeA_{m-n}X_n,$$

worin stehen

  Me  für die Metalle Aluminium, Magnesium bzw. Zink, vorzugsweise Aluminium,
  A  für einen $C_1$- bis $C_{12}$-Kohlenwasserstoffrest, insbesondere einen $C_1$- bis $C_{12}$-Alkylrest, und vorzugsweise einen $C_2$- bis $C_8$-Alkylrest,
  X  für Chlor, Brom, Jod bzw. Wasserstoff, vorzugsweise Chlor bzw. Wasserstoff,
  m  für die Zahl der Wertigkeit des Metalls Me und
  n  für eine Zahl von 0 bis m − 1, insbesondere eine Zahl von 0 bis 1, und vorzugsweise die Zahl 0,

3

mit der Maßgabe, daß das Atomverhältnis Titan aus der Katalysatorkomponente (1) : Metall (Me) aus der Katalysatorkomponente (2) im Bereich von 1 : 0,1 bis 1 : 500, vorzugsweise 1 : 0,2 bis 1 : 200, liegt.

Das erfindungsgemäße Verfahren ist dadurch gekennzeichnet, daß als Titan enthaltende Katalysatorkomponente (1) eingesetzt wird der festphasige Stoff aus einer Suspension, die erhalten worden ist, indem man

(1.1)　in einer ersten Stufe zunächst
(1.1.1)　eine Suspension (I), wie sie sich ergibt beim Zusammenbringen von
　　　(Ia)　100 Gewichtsteilen eines unter Normalbedingungen flüssigen, gegenüber Ziegler-Katalysatorsystemen inerten Kohlenwasserstoffes und
　　　(Ib)　0,1 bis 100, vorzugsweise 1 bis 50 Gewichtsteilen des feinteiligen, porösen, anorganisch-oxidischen Stoffes (Ib), und
(1.1.2)　die Lösung (II) — mit der Maßgabe, daß der in ihr enthaltene Alkohol (IIa) unter Normalbedingungen flüssig und in dem Kohlenwasserstoff (Ia) zu weniger als 10, insbesondere weniger als 5 Volumenprozent löslich sein muß — unter Bildung einer Dispersion (III) miteinander in Berührung bringt, dann
(1.2)　in einer zweiten Stufe die aus Stufe (1.1) erhaltene Dispersion (III) — gegebenenfalls unter Ergänzung des Kohlenwasserstoffes (Ia) — bei einer Temperatur zwischen 10 und 140, vorzugsweise zwischen 30 und 130°C unter Bildung einer Suspension so lange der azeotropen Destillation unterwirft, bis im Destillat kein Alkohol mehr übergeht, und anschließend
(1.3)　in einer dritten Stufe die aus Stufe (1.2) erhaltene Suspension mit einer Metallverbindung (IV) der allgemeinen Formel

$$MtG_{s-t}E_t,$$

worin stehen

Mt　für die Metalle Aluminium bzw. Silicium, vorzugsweise Aluminium,
G　für einen $C_1$- bis $C_{12}$-Kohlenwasserstoffrest, insbesondere einen $C_1$- bis $C_{12}$-Alkylrest, und vorzugsweise einen $C_2$- bis $C_8$-Alkylrest,
E　für Chlor, Brom, Jod, Wasserstoff bzw. einen Rest —OD, vorzugsweise Chlor bzw. Wasserstoff,
D　für einen $C_1$- bis $C_{12}$-Kohlenwasserstoffrest, insbesondere einen $C_1$- bis $C_{12}$-Alkylrest, und vorzugsweise einen $C_2$- bis $C_8$-Alkylrest,
s　für die Zahl der Wertigkeit des Metalls Mt, und
t　für eine Zahl von (a) 0 bis s − 1, vorzugsweise eine Zahl von 1 bis 2, wenn Mt Aluminium ist bzw. (b) 0 bis 4, vorzugsweise 1 bis 4, wenn Mt Silicium ist,

unter Erhaltung des Zustandes einer Suspension und unter Entweichen eines Gases so lange versetzt, bis kein Gas mehr entweicht.

Eine besondere Ausgestaltung des erfindungsgemäßen Verfahrens ist dadurch gekennzeichnet, daß als Titan enthaltende Katalysatorkomponente (1) eingesetzt wird der festphasige Stoff aus einer Suspension, die erhalten worden ist, indem man

(1.4)　in einer zusätzlichen vierten Stufe die aus Stufe (1.3) resultierende Suspension mit einer Metallverbindung (V) der gleichen allgemeinen Formel wie der der Metallverbindung (IV) aus Stufe (1.3) unter Erhaltung des Zustandes einer Suspension so lange versetzt, bis das Atomverhältnis Titan in dem Titantrihalogenid (IIb) : Metall in der Metallverbindung (V) im Bereich von 1 : 0,1 bis 1 : 500, vorzugsweise von 1 : 0,2 bis 1 : 200, liegt.

Gegenüber vergleichbaren bekannten Verfahren zeichnet sich das erfindungsgemäße z. B. dadurch aus, daß es mit technisch-wirtschaftlichen Verbesserungen verbunden ist: So ist die Herstellung der Katalysatorkomponente (1) relativ einfach; da hierbei zudem nicht — wie sonst erforderlich — mit einem Überschuß an der Titanverbindung gearbeitet zu werden braucht, ergibt sich auch hinsichtlich der Wirtschaftlichkeit sowie der Umweltbelastung ein deutlicher Fortschritt.

Es kommt hinzu, daß das Verfahren auch eine konstante »Fahrweise« gestattet, da das neue Katalysatorsystem in seiner spezifischen Ausbeute sowohl über die Chargen als auch über die Zeit eine bemerkenswerte Konstanz aufweist.

Des weiteren läßt sich bei der Polymerisation von Olefinen mittels der neuen Katalysatorsysteme ein erheblicher Vorteil noch dadurch erreichen, daß diese Katalysatorsysteme mit einer relativ hohen

4

Produktivität (gerechnet als Gewichtsmenge Polymerisat pro Gewichtseinheit Titan) sowie einem geringen Halogengehalt erhalten werden können. Die an sich unerwünschten Katalysatorbestandteile im Polymerisat (Titan und Halogen) sind dann so gering, daß sie dort nicht mehr stören und ihre Entfernung — wozu ein eigener Arbeitsgang erforderlich wäre — entfallen kann. Die nach dem erfindungsgemäßen Verfahren erhältlichen Polymerisate weisen darüber hinaus weitere fortschrittliche Eigenschaften auf; z. B. erfüllt ihre Morphologie eine wichtige Reihe von Forderungen: Der Gehalt an staubförmigen Polymerisat-Partikeln ist sehr gering, womit die Gefahr von Staubexplosionen stark vermindert wird; zudem ist die Form der Partikel so, daß sich nicht nur eine gute Rührbarkeit (von Wichtigkeit bei der Polymerisatherstellung) ergibt, sondern auch ein hohes Schüttgewicht —, was für die Handhabung der Polymerisate von Vorteil ist.

Zu dem erfindungsgemäßen Verfahren ist im einzelnen das folgende zu bemerken:

Das Polymerisationsverfahren als solches kann — unter Beachtung der kennzeichnenden Besonderheiten — in praktisch allen einschlägig üblichen technologischen Ausgestaltungen durchgeführt werden, etwa als diskontinuierliches, taktweises oder kontinuierliches Verfahren, sei es z. B. als Suspension-Polymerisationsverfahren, Lösungs-Polymerisationsverfahren oder Trockenphasen-Polymerisationsverfahren. Die erwähnten technologischen Ausgestaltungen — mit anderen Worten: die technologischen Varianten der Polymerisation von Olefinen nach Ziegler — sind aus der Literatur und Praxis wohlbekannt, so daß sich nähere Ausführungen zu ihnen erübrigen. Zu bemerken ist allenfalls noch, daß die neue Titan enthaltende Katalysatorkomponente (1) — wie entsprechende bekannte Katalysatorkomponenten — z. B. außerhalb oder innerhalb des Polymerisationsraumes mit der Katalysatorkomponente (2) zusammengebracht werden kann; im letzt genannten Fall etwa durch räumlich getrennten Eintrag der Komponenten, die im übrigen in Form einer Suspension [Katalysatorkomponente (1)] bzw. Lösung [Katalysatorkomponente (2)] gehandhabt werden können. Auch ist es z. B. möglich, die Katalysatorkomponente (1) oder die vereinigten Katalysatorkomponenten (1) und (2) in Form von Partikeln einzusetzen, die mit einer Umhüllung aus Wachs versehen sind; — eine Arbeitsweise, die beim Trockenphasen-Polymerisationsverfahren von Vorteil sein kann.

Zu der neuen Titan enthaltenden Katalysatorkomponente (1) selbst ist das folgende zu sagen:

Ihre Herstellung erfolgt in drei oder — gegebenenfalls — vier Stufen, die oben sowie nachstehend mit (1.1), (1.2), (1.3) oder (1.4) bezeichnet sind.

In der ersten Stufe (1.1) bringt man miteinander in Berührung (1.1.1) eine Suspension (I) der oben definierten Art und (1.1.2) eine Lösung (II) der oben definierten Art, wobei sich eine Dispersion (III) bildet.

In der zweiten Stufe (1.2) wird die aus Stufe (1.1) erhaltene Dispersion so lange der azeotropen Destillation unterworfen, bis im Destillat kein Alkohol mehr übergeht; hierbei bildet sich eine Suspension.

In der dritten Stufe (1.3) wird die aus Stufe (1.2) erhaltene Suspension mit einer ausgewählten Metallverbindung (IV) so lange versetzt, bis kein Gas mehr entweicht; hierbei bleibt der Zustand einer Suspension erhalten.

In der — potentiellen — vierten Stufe (1.4) kann die Katalysatorkomponente (1) modifiziert werden, indem die aus Stufe (1.3) erhaltene Suspension mit einer bestimmten Menge einer bestimmten Metallverbindung (V) — die die gleiche allgemeine Formel wie die Metallverbindung (IV) aus Stufe (1.3) hat — versetzt wird; auch hierbei bleibt der Zustand einer Suspension erhalten. — Die Durchführung von Stufe (1.4) empfiehlt sich insbesondere dann, wenn man gesteigerten Wert legt auf ein Polymerisat mit herabgesetztem Feinkornanteil, das zudem mit gesteigerter Produktivität anfallen soll.

Die praktische Durchführung der einzelnen Stufen ist einfach und bedarf für den Fachmann keiner näheren Erläuterung. Zu erwähnen ist lediglich das folgende: (a) Bei der azeotropen Destillation in Stufe (1.2) entweicht als Destillat naturgemäß ein Gemisch aus Kohlenwasserstoff (Ia) und Alkohol (IIa), so daß die Dispersion (III) insoweit an diesen beiden Stoffen verarmt. Da indes nur das Abtreiben des Alkohols gewollt wird, ist es oftmals angezeigt — besonders dann, wenn das Destillat relativ reich an Kohlenwasserstoff und relativ arm an Alkohol ist — der Dispersion wieder Kohlenwasserstoff zuzuführen. Dies kann am einfachsten erfolgen, indem man den im Destillat übergegangenen Kohlenwasserstoff nach Kondensation des Destillats und Phasentrennung wieder in die Dispersion zurückführt. (b) In Stufe (1.3) wird zweckmäßigerweise gearbeitet bei Temperaturen von 0 bis 90 und vorzugsweise 10 bis 80°C; das Ende dieser Stufe ist gegeben, sobald beim Zusatz der Metallverbindung kein Gas mehr entweicht. Bei einem weiteren Zusatz von Metallverbindung erfolgt der Übergang zur potentiellen Stufe (1.4) —, was für die Praxis bedeutet, daß die Stufen (1.3) und (1.4) in einem Zuge durchgeführt werden können.

Im allgemeinen ist es zweckmäßig, in Stufe (1.4) bei Temperaturen von 0 bis 90 und vorzugsweise 10 bis 80° C sowie mit Reaktionszeiten von 30 bis 300 und vorzugsweise 30 bis 180 Minuten zu arbeiten.

Die neuen Titan enthaltenden Katalysatorkomponenten (1) lassen sich im Rahmen des eingangs definierten Verfahrens zum Herstellen der dort genannten Polymerisate so einsetzen, wie man üblicherweise die Titan enthaltenden Verbindungen bei der Polymerisation von Olefinen nach Ziegler einsetzt. Insoweit sind also beim erfindungsgemäßen Verfahren keine Besonderheiten gegeben, und es kann auf die aus Literatur und Praxis wohlbekannten Einsatzweisen verwiesen werden. — Es ist hier lediglich noch zu sagen, daß das Verfahren sich vornehmlich zum Herstellen von Homopolymerisaten des Äthylens eignet und daß im Falle des Herstellens von Copolymerisaten des Äthylens mit höheren $\alpha$-Monoolefinen oder des Herstellens von Homopolymerisaten von höheren $\alpha$-Monoolefinen vor allem Propen, Buten-1, 4-Methylpenten-1 und Hexen-1 als $\alpha$-Monoolefine in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Titan enthaltenden Katalysatorkomponenten (1) betrifft, ist im einzelnen noch das folgende zu sagen:

Der in Stufe (1.1) einzusetzende Kohlenwasserstoff (Ia) kann ein üblicher flüssiger, gegenüber Ziegler-Katalysatorsystemen inerter sein, z. B. ein Kohlenwasserstoff aus der Reihe der Hexane, Heptane oder Oktane; — also der Alkane.

Der anorganisch-oxidische Stoff (Ib) wird im allgemeinen ein Alumosilikat oder — insbesondere — ein Siliciumdioxid sein; wichtig ist, daß der Stoff die geforderten Eigenschaften besitzt und möglichst trocken ist (nach 6 Stunden bei einer Temperatur von 160° C und einem Druck von 20 Torr kein Gewichtsverlust mehr). Besonders gut geeignete anorganisch-oxidische Stoffe sind solche, die gemäß der ersten Stufe (1) des in der DE-OS 2 411 735 beschriebenen Verfahrens erhalten werden, insbesondere dann, wenn dabei von Hydrogelen ausgegangen wird, die nach dem in der DE-OS 2 103 243 beschriebenen Verfahren erhalten werden.

Die einzusetzenden Alkohole (IIa) können z. B. sein: Methanol, Äthanol, Propanole sowie Butanole. Als besonders gut geeignet haben sich erwiesen z. B. Methanol, Äthanol, Isopropanol sowie n-Butanol. Die Alkohole (IIa) können eingesetzt werden in Form von Einzelindividuen sowie Gemischen aus zwei oder mehr Einzelindividuen.

Das einzusetzende Titantrihalogenid (IIb) kann ein bei Ziegler-Katalysatorsystemen übliches sein, z. B. ein bei der Reduktion eines Titantetrahalogenids mittels Wasserstoff, Aluminium oder aluminiumorganischen Verbindungen erhaltenes Reaktionsprodukt. Als besonders gut geeignet haben sich erwiesen z. B. Trichloride der Formel $TiCl_3$, wie sie bei der Reduktion von Titantetrachlorid mittels Wasserstoff anfallen sowie Trichloride der Formel $TiCl_3 \cdot \frac{1}{3} AlCl_3$, wie sie bei der Reduktion von Titantetrachlorid mittels metallischem Aluminium anfallen. Die Titantrihalogenide können eingesetzt werden in Form von Einzelindividuen sowie Gemischen aus zwei oder mehr Einzelindividuen.

Die ebenfalls in Stufe (1.1) einzusetzende Magnesiumverbindung (IIc) kann zweckmäßigerweise eine Verbindung aus den folgenden Klassen von Magnesiumverbindungen sein:

(A) Magnesiumverbindungen der allgemeinen Formel $Mg(OR')_2$, worin steht R' für einen $C_1$- bis $C_{10}$-Kohlenwasserstoffrest, insbesondere für einen $C_1$- bis $C_6$-Alkylrest.
Beispiele für gut geeignete Individuen sind: Magnesiummethylat, -äthylat, -n-propylat, -i-propylat, -cyclohexylat sowie -phenolat.
Besonders gut geeignet sind Magnesiumäthylat sowie -n-propylat.

(B) Komplexe Alkoxide des Magnesiums mit anderen Metallen, insbesondere mit Lithium, Bor, Aluminium sowie Titan.
Beispiele für gut geeignete Individuen sind die komplexen Alkoxide der Formeln $Mg[Al(OC_2H_5)_4]_2$, $Mg_3[Al(OC_2H_5)_6]_2$, $Li_2[Mg(OC_3H_7)_4]$, $Mg[(Ti(OC_3H_7)_6]$ sowie $Mg[B(OC_2H_5)_4]_2$.

(C) Magnesiumhalogenide der allgemeinen Formel $MgHl_2$, worin steht Hl für Chlor, Brom oder Jod, insbesondere für Chlor oder Brom.
Beispiele für gut geeignete Individuen sind Magnesiumchlorid sowie -bromid.

(D) Komplexe der unter (C) aufgeführten Magnesiumhalogenide mit $C_1$- bis $C_6$-Alkoholen, insbesondere $C_1$- bis $C_6$-Alkanolen.
Hiervon sind besonders gut geeignet die Komplexe der Formeln $MgCl_2 \cdot 6 C_2H_5OH$ sowie $MgCl_2 \cdot 4 CH_3OH$.

(E) Magnesiumhalogenidverbindungen der allgemeinen Formel $MgZ(OR')$, wobei für Z das unter (C) und für R' das unter (A) Gesagte gilt.
Ein besonders gut geeignetes Individium hiervon hat die Formel $MgCl(OC_2H_5)$.

(F) Die Magnesium chemisch gebunden enthaltenden Trägermaterialien, die kennzeichnend für den Gegenstand der DE-OS 2 163 851 sind, insbesondere Manasseit (Formel: $Mg_6 \cdot Al_2 \cdot (OH)_{16} \cdot CO_3 \cdot 4 H_2O$), der durch Chlorierung bis zu einem Chlorgehalt von 40 bis 76, und insbesondere 50 bis 72 Gewichtsprozent gebracht worden ist.

Die Magnesiumverbindungen (IIc) können eingesetzt werden in Form von Einzelindividuen oder Gemischen aus zwei und mehr Einzelindividuen; es können selbstverständlich auch solche sein, die beim Herstellen der Lösung (II) in situ entstehen.

Im Rahmen der vorliegenden Erfindung zu bevorzugende Magnesiumverbindungen sind solche der Klassen A, C, D und insbesondere F.

Die in Stufe (1.3) einzusetzende Metallverbindung (IV) kann zweckmäßigerweise eine Verbindung aus den folgenden beiden Verbindungsklassen sein:

6

Aluminiumverbindungen, wie sie repräsentiert werden durch die Formeln

$Al(C_2H_5)_3$, $Al(C_2H_5)_2Cl$, $Al(C_2H_5)_2Br$, $Al(C_2H_5)_{1,5}Cl_{1,5}$,

$Al(C_2H_5)_{1,5}Br_{1,5}$, $Al(C_2H_5)Cl_2$, $Al(C_2H_5)Br_2$, $Al(C_4H_9)_3$,

$Al(C_4H_9)_2Cl$, $Al(C_4H_9)Cl_2$, $Al(C_2H_5)_2H$, $Al(C_4H_9)_2H$,

$Al(C_3H_7)_2(OC_3H_7)$ und $Al(C_2H_5)_{1,5}(OC_2H_5)_{1,5}$.

Besonders gut geeignete Aluminiumverbindungen sind

$Al(C_2H_5)_2Cl$, $Al(C_2H_5)_{1,5}Cl_{1,5}$, $Al(C_2H_5)Cl_2$ sowie $Al(C_2H_5)_2H$.

Siliciumverbindungen, wie sie repräsentiert werden durch die Formeln

$SiCl_4$, $SiBr_4$, $Si(CH_3)_2Cl_2$, $Si(CH_3)_3Cl$, $SiHCl_3$, $Si(C_2H_5)_3H$, $Si(OC_2H_5)_4$ und

$Si(OC_6H_5)_4$.

Besonders gut geeignete Siliciumverbindungen sind

$SiCl_4$, $Si(CH_3)_3Cl$, $Si(C_2H_5)_3Cl$ sowie $Si(C_2H_5)_3H$.

Die Metallverbindungen (IV) können eingesetzt werden in Form von Einzelindividuen sowie Gemischen aus zwei oder mehr Einzelindividuen.

Für die in der potentiellen Stufe (1.4) einzusetzende Metallverbindung (V) gilt das Gleiche wie für die Metallverbindung (IV) aus Stufe (1.3). Die in Stufe (1.4) eingesetzte Metallverbindung kann dieselbe oder eine andere sein wie die in Stufe (1.3) eingesetzte.

Die Katalysatorkomponente (2) betreffend ist zu sagen, daß sich hierfür die einschlägig üblichen Verbindungen eignen; als geeignete Individuen sind z. B. zu nennen das $Al(C_2H_5)_3$, $Al(i-C_4H_9)_3$, $Al(n-C_4H_9)_3$, $Al(C_8H_{17})_3$ und Isoprenylaluminium.

Abschließend ist noch zu bemerken, daß die erfindungsgemäßen, Titan enthaltenden Katalysatorkomponenten (1) empfindlich gegen hydrolytische sowie oxidative Einflüsse sind. Insoweit sollte man beim Umgang mit diesen Substanzen also die für Ziegler-Katalysatoren einschlägig üblichen Vorsichtsmaßnahmen treffen (z. B. Feuchtigkeitsausschluß, Inertgasatmosphäre).

### Beispiel 1

#### (a) Herstellung der neuen Katalysatorkomponente

#### Erste Stufe

Es wird ausgegangen von einer Suspension (I) aus 100 Gewichtsteilen n-Heptan (Ia) und 20 Gewichtsteilen eines feinteiligen porösen Siliciumdioxids (Ib), $SiO_2$, Teilchendurchmesser: 40 bis 148 µm, Porenvolumen: 2,1 cm³/g, Oberfläche: 330 m²/g) sowie einer Lösung (II) aus 100 Gewichtsteilen Methanol (IIa), 4,1 Gewichtsteilen eines Stoffes der Formel $TiCl_3 \cdot 1/3 AlCl_3$ — was 0,98 Gewichtsteilen Titan entspricht — (IIb) und 6,2 Gewichtsteilen Manasseit ($Mg_6 \cdot Al_2 \cdot (OH)_{16} \cdot CO_3 \cdot 4 H_2O$), der durch Halogenierung auf einen Chlorgehalt von 72 Gew.-% gebracht worden ist — was 0,90 Gewichtsteilen Magnesium entspricht — (IIc).

Die Suspension (I), 120 Gewichtsteile, wird mit einer solchen Menge der Lösung (II) vereinigt, daß das Gewichtsverhältnis Siliciumdioxid (Ib) : Titan in dem Titantrihalogenid (IIb) 1 : 0,04 und das Gewichtsverhältnis Siliciumdioxid (Ib) : Magnesium in der Magnesiumverbindung (IIc) 1 : 0,038 beträgt; es wird so eine Dispersion (III) erhalten.

#### Zweite Stufe

Es wird gearbeitet mit einer für azeotrope Destillationen üblichen Vorrichtung, die versehen ist mit einem Rührer sowie einem Abscheider, der den Rückfluß des kondensierten n-Heptans und den Austrag des kondensierten Methanols bewirkt.

In dieser Vorrichtung wird die aus der ersten Stufe erhaltene Dispersion (III) bei einer Temperatur von etwa 80°C unter Bildung einer Suspension so lange der azeotropen Destillation unterworfen, bis im Destillat kein Alkohol mehr übergeht.

#### Dritte Stufe

In dieser Stufe wird die aus der zweiten Stufe erhaltene Suspension bei einer Temperatur von 50°C mit Diäthylaluminiumchlorid [Metallverbindung (IV), in Form einer 20gewichtsprozentigen Lösung in n-Heptan] unter Erhaltung des Zustandes einer Suspension und unter Entweichen eines Gases so lange versetzt, bis kein Gas mehr entweicht. Der Feststoff der resultierenden Suspension hat einen Gehalt an Titan von 1,7 Gew.-%.

Die so erhaltene Suspension wird im weiteren verwendet in einer auf einen Feststoffgehalt von 15 Gew.-% eingestellten Form.

7

### (b) Polymerisation mittels der neuen Katalysatorkomponente

In einem Rührautoklaven — der damit zur Hälfte seines Fassungsvermögen gefüllt ist — legt man 4500 Gewichtsteile Isobutan vor und fügt 0,5 Gewichtsteile der neuen Katalysatorkomponente (in Form einer 15 Gew.-% Feststoff enthaltenden Suspension in n-Heptan) sowie 2,5 Gewichtsteile Triäthylaluminium zu. Sodann wird unter Rühren und bei den — jeweils durch Regelung konstant gehaltenen — Parametern: Äthylendruck = 15 bar, Wasserstoffdruck (zur Molekulargewichtsregelung) = 5 bar, Temperatur = 100° C, über eine Zeitspanne von 2 Stunden polymerisiert, wonach die Polymerisation durch Entspannen des Autoklaven abgebrochen wird.

Nähere Angaben zu dem erhaltenen Polymerisat finden sich in der untenstehenden Tabelle.

### Beispiel 2

#### (a) Herstellung der neuen Katalysatorkomponente

##### Erste Stufe

Sie erfolgt wie in Beispiel 1.

##### Zweite Stufe

Sie erfolgt wie in Beispiel 1.

##### Dritte Stufe

Sie erfolgt wie in Beispiel 1.

##### Vierte Stufe

In dieser weiteren zusätzlichen Stufe wird die aus der dritten Stufe resultierende Suspension bei einer Temperatur von 20° C und innerhalb von 30 Minuten mit Siliciumtetrachlorid [Metallverbindung (V)] unter Erhaltung des Zustandes einer Suspension so lange versetzt, bis das Atomverhältnis Titan in dem Titantrihalogenid (IIb) : Silicium in der Metallverbindung (V) 1 : 10,8 beträgt. Man hält anschließend noch 1 Stunde bei einer Temperatur von 75° C (unter Rühren), reinigt dann die erhaltene Suspension mittels zweimaligem Dekantieren des flüssigen Anteils unter Resubstituieren durch n-Heptan und stellt schließlich mit n-Heptan auf einen Feststoffgehalt von 16 Gew.-% ein. Der Feststoff der dabei resultierenden Suspension hat einen Gehalt an Titan von 0,82 Gew.-%

#### (b) Polymerisation mittels der neuen Katalysatorkomponente

Sie erfolgt wie in Beispiel 1, jedoch werden die 0,5 Gewichtsteile der neuen Katalysatorkomponente eingesetzt in Form der aus der oben beschriebenen vierten Stufe erhaltenen Suspension.

Nähere Angaben zu dem dabei erhaltenen Polymerisat finden sich in der untenstehenden Tabelle.

### Beispiel 3

#### (a) Herstellung der neuen Katalysatorkomponente

##### Erste Stufe

Sie erfolgt wie in Beispiel 1.

##### Zweite Stufe

Sie erfolgt ebenfalls wie in Beispiel 1.

# 0 009 589

### Dritte und vierte Stufe

Sie werden in einem Zug durchgeführt, derart, daß man die aus der zweiten Stufe erhaltene Suspension zunächst bei einer Temperatur von 50°C und innerhalb von 30 Minuten mit Siliciumtetrachlorid unter Erhalt des Zustandes einer Suspension und unter Entweichen eines Gases so lange versetzt, bis kein Gas mehr entweicht (dritte Stufe) und dann die so resultierende Suspension bei einer Temperatur von 75°C und innerhalb von 30 Minuten mit weiterem Siliciumtetrachlorid (wSiCl$_4$) unter Erhaltung des Zustandes einer Suspension so lange versetzt, bis das Atomverhältnis Titan in dem Titantrihalogenid (IIb) : Silicium in dem weiteren Siliciumtetrachlorid (wSiCl$_4$) 1 : 5,4 beträgt. Man bringt anschließend auf Raumtemperatur, reinigt dann die erhaltene Suspension mittels zweimaligem Dekantieren des flüssigen Anteils unter Resubstitution durch n-Heptan und stellt schließlich mit n-Heptan auf einen Feststoffgehalt von 16 Gew.-% ein (vierte Stufe). Der Feststoff der dabei resultierenden Suspension hat einen Gehalt an Titan von 1,95 Gew.-%.

### (b) Polymerisation mittels der neuen Katalysatorkomponente

Sie erfolgt wie in Beispiel 1, mit dem Unterschied, daß nicht 0,5, sondern 0,22 Gewichtsteile der neuen Katalysatorkomponente — in Form der vorstehend beschriebenen Suspension — eingesetzt werden.

Nähere Angaben zu dem dabei erhaltenen Polymerisat finden sich in der untenstehenden Tabelle.

In der Tabelle bedeuten:

PE       =       Ausbeute an Polyäthylen in Gewichtsteilen

PE/Kk     =       Produktivität in Gewichtsteilen Polyäthylen pro Gewichtsteil erfindungsgemäßer Katalysatorkomponente

PE/Ti      =       Produktivität in Gewichtsteilen Polyäthylen pro Gewichtsteil Titan in der erfindungsgemäßen Katalysatorkomponente

Sch       =       Schüttgewicht in g/l

MI        =       Schmelzindex $MI_{2,16}^{190}$ (g/10 Min.)

%<0,1    =       Anteil an Polyäthylen-Partikeln in Gewichtsprozent bzw. mit einem Teilchendurchmesser von kleiner 0,1 bzw.

%<0,5    =       kleiner 0,5 mm (Feinkornanteile).

| Beispiel | PE | PE/Kk | PE/Ti | Sch | MI | %<0,1 | %<0,5 |
|---|---|---|---|---|---|---|---|
| 1 | 2260 | 4500 | 349 000 | 260 | 1,92 | 0,7 | 4,6 |
| 2 | 1500 | 3000 | 366 000 | 340 | 2,41 | 1,3 | 33 |
| 3 | 2100 | 9500 | 490 000 | 250 | 1,10 | 0,2 | 15 |

## Patentansprüche

1. Verfahren zum Herstellen von Homo- und Copolymerisaten von $C_2 - C_6 - \alpha$-Monoolefinen durch Polymerisation des bzw. der Monomeren bei Temperaturen von 30 bis 200°C und Drücken von 0,1 bis 200 bar mittels eines Ziegler-Katalysatorsystems aus

(1)      einer Titan enthaltenden Katalysatorkomponente, die erhalten worden ist unter Verwendung von

      (i)     einem feinteiligen, porösen, anorganisch-oxidischen Stoff (Ib), der einen Teilchendurchmesser von 1 bis 1000 μm, ein Porenvolumen von 0,3 bis 3 cm$^3$/g sowie eine Oberfläche von 100 bis 1000 m$^2$/g besitzt und die Formel $SiO_2 \cdot aAl_2O_3$ — worin a steht für eine Zahl im Bereich von 0 bis 2 — hat, und

      (ii)    einer Lösung (II), wie sie sich ergibt beim Zusammenbringen von

          (IIa)   100 Gewichtsteilen eines Alkohols — in Form eines Einzelindividuums oder eines Gemisches aus zwei oder mehr Einzelindividuen — der allgemeinen Formel

            Z–OH,

            worin Z steht für einen gesättigten $C_1$- bis $C_8$-Kohlenwasserstoffrest,

          (IIb)   0,01 bis 6 Gewichtsteilen (gerechnet als Titan) eines Titantrihalogenids, wobei das Halogen Chlor und/oder Brom sein kann, sowie

(IIc) 0,01 bis 4 Gewichtsteilen (gerechnet als Magnesium) einer in dem Alkohol (IIa) löslichen Magnesiumverbindung — in Form eines Einzelindividuums oder eines Gemisches aus zwei oder mehr Einzelindividuen —,

mit den Maßgaben, daß das Gewichtsverhältnis anorganisch-oxidischer Stoff (Ib) : Titan in dem Titantrihalogenid (IIb) im Bereich von 1 : 0,01 bis 1 : 0,2 und das Gewichtsverhältnis anorganisch-oxidischer Stoff (Ib) : Magnesium in der Magnesiumverbindung (IIc) im Bereich von 1 : 0,01 bis 1 : 0,25 liegt, und

(2) einer Metallverbindung der allgemeinen Formel

$$MeA_{m-n}X_n,$$

worin stehen

Me für die Metalle Aluminium, Magnesium bzw. Zink,
A für einen $C_1$- bis $C_{12}$-Kohlenwasserstoffrest,
X für Chlor, Brom, Jod bzw. Wasserstoff,
m für die Zahl der Wertigkeit des Metalls Me und
n für eine Zahl von 0 bis $m-1$,

mit der Maßgabe, daß das Atomverhältnis Titan aus der Katalysatorkomponente (1) : Metall (Me) aus der Katalysatorkomponente (2) im Bereich von 1 : 0,1 bis 1 : 500 liegt,

dadurch gekennzeichnet, daß als Titan enthaltende Katalysatorkomponente (1) eingesetzt wird der festphasige Stoff aus einer Suspension, die erhalten worden ist, indem man

(1.1) in einer ersten Stufe zunächst
(1.1.1) eine Suspension (I), wie sie sich ergibt beim Zusammenbringen von
(Ia) 100 Gewichtsteilen eines unter Normalbedingungen flüssigen, gegenüber Ziegler-Katalysatorsystemen inerten Kohlenwasserstoffes und
(Ib) 0,1 bis 100 Gewichtsteilen des feinteiligen, porösen, anorganisch-oxidischen Stoffes (Ib), und
(1.1.2) die Lösung (II) — mit der Maßgabe, daß der in ihr enthaltene Alkohol (IIa) unter Normalbedingungen flüssig und in dem Kohlenwasserstoff (Ia) zu weniger als 10 Volumenprozent löslich sein muß —
unter Bildung einer Dispersion (III) miteinander in Berührung bringt, dann
(1.2) in einer zweiten Stufe die aus Stufe (1.1) erhaltene Dispersion (III) — gegebenenfalls unter Ergänzung des Kohlenwasserstoffes (Ia) — bei einer Temperatur zwischen 10 und 140° C unter Bildung einer Suspension so lange der azeotropen Destillation unterwirft, bis im Destillat kein Alkohol mehr übergeht, und anschließend
(1.3) in einer dritten Stufe die aus Stufe (1.2) erhaltene Suspension mit einer Metallverbindung (IV) der allgemeinen Formel

$$MtG_{s-t}E_t,$$

worin stehen

Mt für die Metalle Aluminium bzw. Silicium,
G für einen $C_1$- bis $C_{12}$-Kohlenwasserstoffrest,
E für Chlor, Brom, Jod, Wasserstoff bzw. einen Rest $-OD$,
D für einen $C_1$- bis $C_{12}$-Kohlenwasserstoffrest,
s für die Zahl der Wertigkeit des Metalls Mt, und
t für eine Zahl von (a) 0 bis $s-1$, wenn Mt Aluminium ist, bzw. (b) 0 bis 4, wenn Mt Silicium ist,

unter Erhaltung des Zustandes einer Suspension und unter Entweichen eines Gases so lange versetzt, bis kein Gas mehr entweicht.

2. Verfahren gemäß Patentanspruch 1, dadurch gekennzeichnet, daß als Titan enthaltende Katalysatorkomponente (1) eingesetzt wird der festphasige Stoff aus einer Suspension, die erhalten worden ist, indem man

(1.4) in einer zusätzlichen vierten Stufe die aus Stufe (1.3) resultierende Suspension mit einer Metallverbindung (V) der gleichen allgemeinen Formel wie der der Metallverbindung (IV) aus Stufe (1.3) unter Erhaltung des Zustandes einer Suspension so lange versetzt, bis das

**0 009 589**

Atomverhältnis Titan in dem Titantrihalogenid (IIb) : Metall in der Metallverbindung (V) im Bereich von 1 : 0,1 bis 1 : 500 liegt.

## Claims

1. Process for the preparation of homopolymers and copolymers of $C_2-C_6$-$\alpha$-monoolefines by polymerisation of the monomer or monomers at temperatures of 30 to 200° and pressures of 0.1 to 200 bar by means of a Ziegler catalyst system comprising

(1)    a titanium-containing catalyst component which has been obtained using
      (i)    a finely divided, porous, inorganic-oxidic substance (Ib), which has a particle diameter of 1 to 1000 µm, a pore volume of 0.3 to 3 $cm^3/g$ and a surface area of 100 to 1000 $m^2/g$ and has the formula $SiO_2 \cdot aAl_2O_3$, wherein a represents a number in the range from 0 to 2, and
      (ii)   a solution (II) which results on bringing together
          (IIa)  100 parts by weight of an alcohol, in the form of an individual compound or of a mixture of two or more individual compounds, of the general formula

$$Z-OH$$

              wherein Z represents a saturated $C_1$- to $C_8$-hydrocarbon radical,
          (IIb)  0.01 to 6 parts by weight (calculated as titanium) of a titanium trihalide, wherein the halogen can be chlorine and/or bromine, and
          (IIc)  0.01 to 4 parts by weight (calculated as magnesium) of a magnesium compound, in the form of an individual compound or of a mixture of two or more individual compounds, which is soluble in the alcohol (IIa),
    with the provisos that the weight ratio of inorganic-oxidic substance (Ib) : titanium in the titanium trihalide (IIb) is in the range from 1 : 0.01 to 1 : 0.2 and the weight ratio of inorganic-oxidic substance (Ib) : magnesium in the magnesium compound (IIc) is in the range from 1 : 0.01 to 1 : 0.25, and
(2)    a metal compound of the general formula

$$MeA_{m-n}X_n$$

wherein

Me   represents the metals aluminium, magnesium or zinc,
A     represents a $C_1$- to $C_{12}$-hydrocarbon radical,
X     represents chlorine, bromine, iodine or hydrogen,
m    represents the numerical value of the valency of the metal Me and
n    represents a number from 0 to $m-1$,

with the proviso that the atomic ratio of titanium from the catalyst component (1) : metal (Me) from the catalyst component (2) is in the range from 1 : 0.1 to 1 : 500,

characterised in that the titanium-containing catalyst component (1) empolyed is the solid-phase substance from a suspension which has been obtained by

(1.1)    in a first stage initially
(1.1.1) bringing into contact a suspension (I), which is obtained on bringing together
      (Ia)  100 parts by weight of a hydrocarbon which is liquid under normal conditions and is inert towards Ziegler catalyst systems and
      (Ib)  0.1 to 100 parts by weight of the finely divided, porous, inorganic-oxidic substance (Ib) and
(1.1.2) the solution (II) — with the proviso that the alcohol (IIa) contained therein must be liquid under normal conditions and be soluble to the extent of less than 10 per cent by volume in the hydrocarbon (Ia) —
      to form a dispersion (III), thereafter
(1.2)    in a second stage, subjecting the dispersion (III) obtained from stage (1.1) — if appropriate with supplementation of the hydrocarbon (Ia) — to azeotropic distillation at a temperature of between 10 and 140° C, with formation of a suspension, until alcohol no longer passes over in the distillate, and thereafter
(1.3)    in a third stage, adding to the suspension obtained from stage (1.2) a metal compound (IV) of the general formula

$$MtG_{s-t}E_t$$

11

0 009 589

wherein

Mt    represents the metals aluminium or silicon,
G    represents a $C_1$- to $C_{12}$-hydrocarbon radical,
E    represents chlorine, bromine, iodine, hydrogen or a $-OD$ radical,
D    represents a $C_1$- to $C_{12}$-hydrocarbon radical,
s    represents the numerical value of the valency of the metal Mt and
t    represents a number from (a) 0 to $s-1$, if Mt is aluminium or (b) 0 to 4, if Mt is silicon,

whilst maintaining the state of a suspension, and with evolution of a gas, the addition being continued until no more gas is evolved.

2. Process according to Patent Claim 1, characterised in that the titanium-containing catalyst component (1) employed is the solid-phase substance from a suspension which has been obtained by

(1.4)    in an additional fourth stage, adding to the suspension resulting from stage (1.3) a metal compound (V) of the same genral formula as that of the metal compound (IV) of stage (1.3), whilst maintaining the state of a suspension, until the atomic ratio of titanium from the titanium trihalide (IIb) : metal in the metal compound (V) is in the range from 1 : 0.1 to 1 : 500.

## Revendications

1. Procédé pour la préparation d'homo- et copolymères d'$\alpha$-monooléfines en $C_2$ à $C_6$ par polymérisation du ou des monomères à une température comprise entre 30 et 200°C et sous une pression de 0,1 à 200 bars, au moyen d'un système catalyseur de Ziegler formé de:

(1)    un constituant de catalyseur contenant du titane, qui a été obtenu en utilisant:
    (i)    une substance du type oxyde inorganique, poreuse et finement divisée (Ib), qui présente un diamètre de particules de 1 à 1000 microns, un volume de pores de 0,3 à 3 cm$^3$/g et une surface de 100 à 1000 m$^2$/g et qui répond à la formule $SiO_2 \cdot aAl_2O_3$ — dans laquelle a est mis pour un nombre compris entre 0 et 2 — et
    (ii)    une solution (II) qui résulte du mélange de
        (IIa)    100 parties en poids d'un alcool — utilisé isolément ou sous forme de mélange de deux ou de plusieurs alcools — de formule générale

            $Z-OH$

            dans laquelle Z est mis pour un radical hydrocarboné saturé en $C_1$ à $C_8$,
        (IIb)    0,01 à 6 parties en poids (calculées en tant que titane) d'un trihalogénure de titane, l'halogène pouvant être le chlore et/ou le brome, et
        (IIc)    0,01 à 4 parties en poids (calculées en tant que magnésium) d'un composé magnésien soluble dans l'alcool (IIa) — utilisé isolément ou sous forme de deux ou de plusieurs composés magnésiens —
    avec ces dispositons particulières que le rapport pondéral de la substance du type oxyde inorganique (Ib) au titane contenu dans le trihalogénure de titane (IIb) se situe dans la gamme de 1 : 0,01 à 1 : 0,2 et que le rapport pondéral de la substance du type oxyde inorganique (Ib) au magnésium contenu dans le composé magnésien (IIc) se situe dans la gamme de 1 : 0,01 à 1 : 0,25, et
(2)    un composé métallique de formule générale

    $MeA_{m-n}X_n$,

    dans laquelle

    Me    est mis pour l'un des métaux aluminium, magnésium et zinc,
    A    est mis pour un radical hydrocarboné en $C_1$ à $C_{12}$,
    X    est mis pour un chlore, un brome, un iode ou un hydrogène,
    m    est le nombre de valence du métal Me et
    n    est un nombre de 0 à $m-1$,

    avec cette disposition particulière que le rapport atomique du titane du constituant de catalyseur (1) au métal (Me) du constituant de catalyseur (2) se situe dans la gamme de 1 : 0,1 à 1 : 500,

12

# 0 009 589

caractérisé en ce qu'on utilise, en tant que constituant de catalyseur contenant du titane (1), la substance en phase solide contenue dans une suspension qui a été obtenue

(1.1) en une première phase, en mettant en contact mutuel, pour former une dispersion (III), tout d'abord

(1.1.1) une suspension (I), telle qu'obtenue en mélangeant

(Ia) 100 parties en poids d'un hydrocarbure liquide dans les conditions normales, inerte à l'égard des systèmes catalyseurs de Ziegler, et

(Ib) 0,1 à 100 parties en poids de la substance du type oxyde inorganique, poreuse et finement divisée (Ib) et

(1.1.2) la solution (II) — avec cette disposition particulière que l'alcool (IIa) qui y est contenu est liquide dans les conditions normales et qu'il doit être soluble dans l'hydrocarbure (Ia) à raison de moins de 10% en volume, puis,

(1.2) en une deuxième phase, en soumettant la dispersion (III) obtenue dans la phase (1.1) — le cas échéant, en complétant l'hydrocarbure (Ia) — à la distillation azéotropique à une température comprise entre 10 et 140°C, avec formation d'une suspension, jusqu'à ce qu'il ne passe plus d'alcool dans le distillat, et immédiatement après,

(1.3) en une troisième phase, en mélangeant la suspension obtenue dans la phase (1.2) avec un composé métallique (IV) de formule générale

$$MtG_{s-t}E_t$$

dans laquelle

Mt est mis pour l'un des métaux aluminium et silicium,
G pour un radical hydrocarboné en $C_1$ à $C_{12}$,
E pour un chlore, un brome, un iode, un hydrogène ou un radical $-OD$,
D pour un radical hydrocarboné en $C_1$ à $C_{12}$,
s pour le nombre de valence du métal Mt et
t pour un nombre (a) de 0 à $s-1$ lorsque Mt est l'aluminium et (b) de 0 à 4 lorsque Mt est le silicium,

avec maintien de l'état d'une suspension et avec dégagement d'un gaz, jusqu'à ce qu'il ne se dégage plus de gaz.

2. Procédé selon la revendication 1, caractérisé en ce qu'on utilise, en tant que constituant de catalyseur contenant du titane (1), la substance en phase solide contenue dans une suspension qui a été obtenue

(1.4) en mélangeant, dans une quatrième phase supplémentaire, la suspension résultant de la phase (1.3) avec un composé métallique (V) de même formule générale que le composé métallique (IV) de la phase (1.3), avec maintien de l'état d'une suspension, jusqu'à ce que le rapport atomique du titane contenu dans le trihalogénure de titane (IIb) au métal contenu dans le composé métallique (V) se situe dans la gamme de 1 : 0,01 à 1 : 500.

13